# EUROPÄISCHE PATENTSCHRIFT

(11) **EP 1 293 382 B1**
(45) Veröffentlichungstag und Bekanntmachung des Hinweises auf die Patenterteilung: **17.03.2010**
(21) Anmeldenummer: 02015995.0
(22) Anmeldetag: 18.07.2002
(51) Int. Cl.: B60Q 3/02

(54) **Beleuchtungsanordnung für Kraftfahrzeug-Innenraum**
Light arrangement for vehicle interior
Agencement lumineux pour habitacle de véhicule

(30) Priorität: 12.09.2001 DE 10144790
(43) Veröffentlichungstag der Anmeldung: 19.03.2003
(73) Patentinhaber: Bayerische Motoren Werke Aktiengesellschaft, 80809 München (DE)
(72) Erfinder: Gröber, Albert, 82223 Eichenau (DE); Ripperger, Joachim, 85774 Unterföhring (DE)

(56) Entgegenhaltungen:
- DE-C1- 19 506 651
- US-A- 5 938 321
- PATENT ABSTRACTS OF JAPAN vol. 2000, no. 13, 5. Februar 2001 (2001-02-05) & JP 2000 276967 A (YAZAKI CORP), 6. Oktober 2000 (2000-10-06)

## Beschreibung

Die Erfindung betrifft eine Beleuchtungsanordnung zur Beleuchtung des Innenraums eines Kraftfahrzeugs, mit einer Innenleuchte, die eine erste Lichtquelle, einen Schalter zum Einschalten der ersten Lichtquelle und eine von dem Schalter beabstandete zweite Lichtquelle mit einer niedrigeren Lichtleistung als die erste Lichtquelle aufweist. Die Innenleuchte ist derart in dem Kraftfahrzeug angeordnet und ausgestaltet, daß durch die zweite Lichtquelle ein von der Innenleuchte beabstandeter Teil der Fahrzeug-Inneneinrichtung beleuchtbar ist.

US 5,938,321 beschreibt eine derartige Anordnung. Die Innenleuchte weist eine Glühlampe zur Ausleuchtung des Fahrzeug-Innenraums und ferner eine Leuchtdiode (LED) auf. Die LED dient der Beleuchtung eines Teils der Fahrzeug-Inneneinrichtung. Die Glühlampe kann durch Betätigung eines Schalters ein- und ausgeschaltet werden, während die LED unabhängig von dem Schaltzustand des Schalters ist.

Ein Vorteil einer derartigen Beleuchtungsanordnung besteht darin, daß zwei Lichtquellen mit unterschiedlicher Lichtleistung zur Verfügung stehen. Die schwächere Lichtquelle kann so ausgelegt werden, daß sie kein die Wahrnehmung der Fahrzeugaußenwelt störendes Licht erzeugt und dennoch einen Teil der Fahrzeug-Inneneinrichtung beleuchtet, zum Beispiel elektrische Schalter, Regler, andere Bedienelemente und/oder andere Konturen innerhalb des Kraftfahrzeugs. Insbesondere kann die schwächere Lichtquelle während die Zündung des Kraftfahrzeugs eingeschaltet ist und/oder während die Fahrzeugscheinwerfer eingeschaltet sind ununterbrochen leuchten.

Die in US 5,938,321 beschriebene Beleuchtungsanordnung hat jedoch den Nachteil, daß der Schalter der Innenleuchte selbst nicht beleuchtet ist und daher bei schlechten Beleuchtungsverhältnissen unter Umständen nicht sofort aufgefunden wird.

DE 195 06 651 beschreibt eine Innenleuchte mit einer zweiten Lichtquelle (LED) zur Beleuchtung eines Schalter über einen Lichtleiter.

JP 2000 276 967 beschreibt die Erzeugung einer Lichtkontur um einen Schalter.

Aufgabe der vorliegenden Erfindung ist es, eine Beleuchtungsanordnung der eingangs genannten Art anzugeben, die die Auffindbarkeit des Schalters verbessert, jedoch den Aufwand für die Herstellung der Innenleuchte gering hält.

Ein wesentlicher Gedanke der Erfindung liegt darin, daß eine Lichtführung vorgesehen ist, die beim Betrieb der schwächeren Lichtquelle Licht von der schwächeren Lichtquelle in Richtung des Schalters führt, um eine Lichtkontur entsprechend einer Außenkontur des Schalters zu erzeugen.

Insbesondere wenn die schwächere Lichtquelle während des Betriebes eines Kraftfahrzeugs und/oder während die Außenscheinwerfer des Kraftfahrzeugs eingeschaltet sind ununterbrochen leuchtet, steht sie kontinuierlich für die Erzeugung der Lichtkontur zur Verfügung. Sie ist in dieser Hinsicht einer in den Schalter integrierten Lichtquelle gleichwertig. Schalter mit integrierter Lichtquelle sind jedoch aufwendiger in der Herstellung. Weiterhin benötigen sie in der Regel mehr Raum und existiert mit der integrierten Lichtquelle ein zusätzliches Bauteil, das einen potentiellen Fehlerfaktor darstellt.

Die Lichtkontur kann einem Teil oder der vollständigen Außenkontur des Schalters entsprechen. Insbesondere weist die Lichtkontur einen linienartigen Rand einer Lichtzone auf, wobei der linienartige Rand ungefähr die Form und Lage der Außenkontur oder des Teils der Außenkontur des Schalters hat.

Die Lichtkontur entspricht vorzugsweise der Außenkontur eines Betätigungselements des Schalters, durch dessen Betätigung eine Schaltfunktion des Schalters ausgelöst wird, beispielsweise einem Druckknopf oder Berührungssensor. Alternativ ist das Betätigungselement von dem Außenrand des Schalters beabstandet und die Lichtkontur entspricht dem Außenrand. Dennoch erleichtert die Lichtkontur auch in diesem Fall das Auffinden des Schalters, bzw. des Betätigungselements.

Unter einem Schalter wird jedes elektrische Bauteil verstanden, durch dessen Betätigung eine elektrische Schaltfunktion ausgelöst werden kann.

Die schwächere Lichtquelle der Innenleuchte weist vorzugsweise ein Leuchtmittel auf, welches Licht auf andere Weise als durch Glühemission erzeugt, wie es bei Glühbirnen der Fall ist. Das Leuchtmittel ist beispielsweise eine LED. Eine derartige Lichtquelle hat den Vorteil, daß sie die Innenleuchte nur geringfügig erwärmt. Daher können kostengünstigere, weniger temperaturresistente Materialien verwendet werden, insbesondere für den Schalter, und es muß keine thermische Isolierung zwischen der schwächeren Lichtquelle und dem Schalter vorgesehen werden. Außerdem sind die Energieverluste bei der Lichterzeugung gering.

Die Innenleuchte ist insbesondere so ausgestaltet, daß das Licht von der schwächeren Lichtquelle selektiv gerichtet, das heißt in einem eingeschränkten Raumwinkelbereich, abgestrahlt wird. Die schwächere Lichtquelle leuchtet in diesem Fall den Fahrzeug-Innenraum nicht gleichmäßig aus, sondern es wird gezielt ein bestimmter Bereich der Fahrzeug-Inneneinrichtung angestrahlt.

Vorzugsweise liegt die Leuchtstärke des von der schwächeren Lichtquelle erzeugten Lichts in etwa 50 cm bis 1 m Entfernung von der Innenleuchte im Bereich von 0,2 bis 4 Lux. Somit ist die Beleuchtungswirkung bei Tageslicht kaum feststellbar. Bei Nacht kann der von der schwächeren Lichtquelle beleuchtete Teil der Fahrzeug-Inneneinrichtung gut wahrgenommen werden. Insbesondere wenn das Licht nur auf die Fahrzeug-Inneneinrichtung gerichtet ist, nicht jedoch auf die Fensterscheiben, wird die Sicht durch die Fensterscheiben nicht beeinträchtigt.

Die Erfindung wird nun anhand der beigefügten Zeichnung beispielhaft näher erläutert. Die einzelnen Figuren der Zeichnung zeigen:
Fig. 1 eine schematische Darstellung einer Beleuchtungsanordnung in einem Fahrzeug-Innenraum,
Fig. 2 Details einer ersten Ausführungsform einer Fahrzeuginnenleuchte und
Fig. 3 Details einer zweiten Ausführungsform einer Fahrzeuginnenleuchte.

In der Zeichnung sind funktionsgleiche und funktionsähnliche Teile mit gleichen Bezugszeichen bezeichnet.

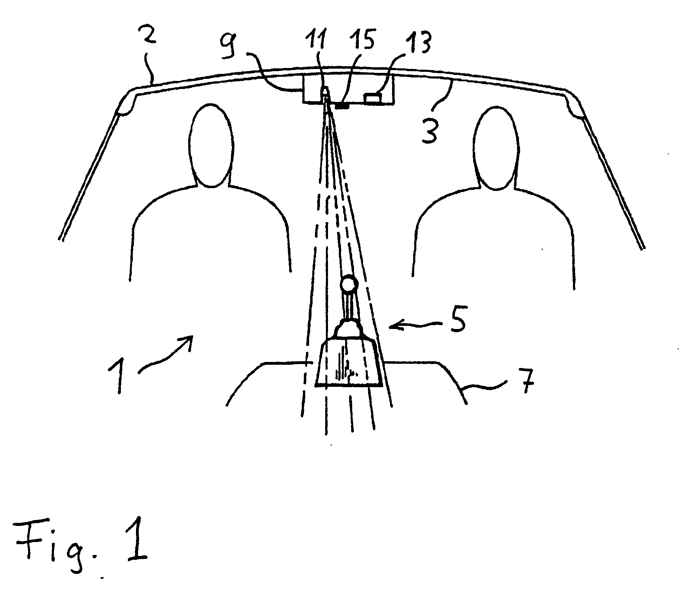

In Fig. 1 sind die Umrisse zweier Personen in einem Fahrzeug-Innenraum 1 zu erkennen. Oben wird der Fahrzeug-Innenraum 1 durch ein Fahrzeugdach 2, das einen Fahrzeughimmel 3 bildet, nach außen abgegrenzt. An dem Fahrzeughimmel 3 ist eine Innenleuchte 9 angebracht, die eine Glühlampe 13 zur Ausleuchtung des Fahrzeug-Innenraums 1 aufweist. Die Glühlampe 13 kann durch Betätigung eines Schalters 15 ein- und ausgeschaltet werden. Weiterhin weist die Innenleuchte 9 eine Leuchtdiode (LED) 11 auf, die eine wesentlich geringere Lichtleistung als die Glühlampe 13 hat und die sogenanntes Auflicht zur Verbesserung der visuellen Erkennung von Teilen der Fahrzeug-Inneneinrichtung abstrahlt. In dem in Fig. 1 dargestellten Fall ist das Auflicht auf eine Schalteinrichtung 5 zum Schalten eines Fahrzeuggetriebes und auf eine Konsole 7 gerichtet.

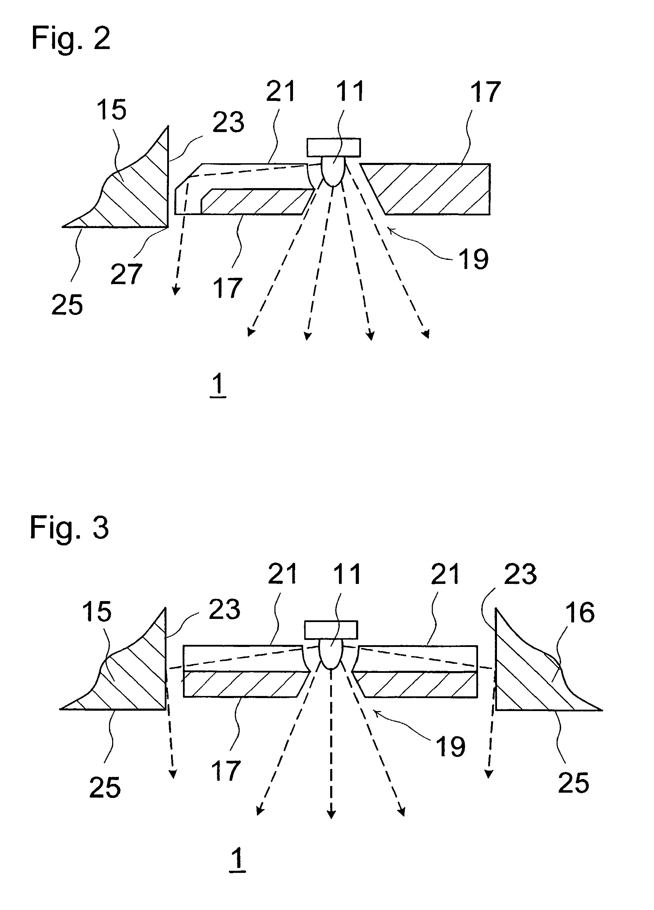

Fig. 2 zeigt in Querschnittsdarstellung Teile einer Fahrzeuginnenleuchte, zum Beispiel der Innenleuchte 9 in Fig. 1. Eine LED 11 emittiert Auflicht durch eine Lichtöffnung 19 einer Blende 17 hindurch in einen Fahrzeug-Innenraum 1. Die Lichtöffnung 19 hat einen kegelartigen Querschnitt, so daß das Auflicht nur in einem begrenzten Raumwinkelbereich abgestrahlt wird. Die Blende 17 besteht aus einem lichtundurchlässigen Material.

Ein Schalter 15 zum Einschalten einer nicht in Fig. 2 gezeigten Glühlampe ist teilweise im linken Figurenteil erkennbar. Durch Druck auf eine Schalteroberfläche 25 kann der Schalter 15 betätigt werden. Im Vergleich zu der Oberfläche der Blende 17 bildet die Schalteroberfläche 25 einen Vorsprung in den Fahrzeug-Innenraum 1. An der Seite der Blende 17 weist der Schalter 15 einen linienartigen Rand 27 auf, an dem die Schalteroberfläche 25 in eine um 90 Grad abgewinkelt angeordnete Seitenfläche 23 des Schalters 15 übergeht. Der Rand 27 bildet eine Außenkontur des Schalters 15.

In dem zwischen der LED 11 und dem Schalter 15 gelegenen Bereich der Blende 17 befindet sich ein Lichtleiter 21, der - von dem Fahrzeug-Innenraum 1 aus gesehen - teilweise von der Blende 17 abgedeckt ist. In der Nähe der Seitenfläche 23 jedoch ist der Lichtleiter 21 um einen Rand der Blende 17 herumgeführt, so daß von der LED 11 auf der Rückseite der Blende 17 in den Lichtleiter 21 eingekoppeltes Licht um diesen Rand herumgeleitet wird und an einer Grenzfläche des Lichtleiters 21 in den Fahrzeug-Innenraum 1 austritt.

In der zur Zeichnungsebene von Fig. 2 senkrechten Richtung erstreckt sich der Lichtleiter 21 entlang der Seitenfläche 23. Weiterhin umringt der Lichtleiter 21 teilweise die LED 11 und erstreckt sich in dem von der Blende 17 abgedeckten Bereich derart, daß von der LED 11 eingekoppeltes Licht nicht nur in der Zeichnungsebene sondern zumindest in einem Abschnitt entlang der Seitenfläche 23 aus dem Lichtleiter 21 in den Fahrzeug-Innenraum 1 austritt. Somit entsteht zwischen dem Schalter 15 und der Blende 17 eine Hell-Dunkelverteilung, die der Außenkontur des Schalters 15 an dem Rand 27 entspricht. Dadurch, daß der Schalter 15 in den Fahrzeug-Innenraum 1 vorspringt, ist der Übergang von hell zu dunkel, der sich einem von dem Schalter 15 entfernten Betrachter in dem Fahrzeug-Innenraum 1 darstellt, an dem Rand 27 scharf.

Der Lichtleiter 21 kann, wie in Fig. 2 dargestellt, in Abstand zu der Seitenfläche 23 angeordnet sein. Alternativ stößt der Lichtleiter 21 an die Seitenfläche 23 an.

Der Lichtleiter 21 besteht aus einem transparenten Material, das vorzugsweise einen hohen Brechungsindex n besitzt, insbesondere n > 2. auf diese Weise kann des von der LED 11 kommende, in den Lichtleiter 21 eingekoppelte Licht nahezu verlustfrei um den der Seitenfläche 23 gegenüberliegenden Rand der Blende 17 herumgeführt werden. Vorzugsweise hat die dem Lichtleiter 21 zugewandte Oberfläche der Blende 17 einen hohen Reflexionsgrad r, insbesondere r > 0,8, und/oder ist verspiegelt.

Der Lichtleiter 21 und die Blende 17 können einstückig oder als separate Teile ausgeführt sein. Es ist auch möglich, daß sich die Blende nicht in den Bereich zwischen der LED 11 und dem Schalter 15 hinein erstreckt und daß statt dessen ein der Blende 17 entsprechender Bereich an der Oberfläche des Lichtleiter 21 lichtundurchlässig ausgestaltet ist, beispielsweise durch Aufbringen einer lichtundurchlässigen Oberflächenschicht.

Weiterhin kann der Lichtleiter ein fortgesetzter Teil einer transparenten Abdeckung zur Abdeckung der Lichtquelle sein, die durch den Schalter eingeschaltet werden kann. Eine derartige Abdeckung, beispielsweise eine Scheibe, ist üblicherweise zwischen dieser Lichtquelle und dem Fahrzeug-Innenraum angeordnet, um das von der Lichtquelle emittierte Licht möglichst gleichmäßig oder gerichtet in den Fahrzeug-Innenraum abzustrahlen. Durch die einstückigen Ausführung des Lichtleiter und der Abdeckung werden die Anzahl der Bauteile und damit der Herstellungsaufwand verringert.

Bei einer weiteren Ausführungsform ist eine Mehrzahl der schwächeren Lichtquellen in der Innenleuchte vorgesehen. Diese Lichtquellen dienen zum Beispiel der Beleuchtung von unterschiedlichen Bereichen der Fahrzeug-Inneneinrichtung. Sie können die gleiche Lichtleistung oder unterschiedliche Lichtleistungen haben. Licht, das von diesen schwächeren Lichtquellen emittiert wird, wird durch eine Lichtführung oder eine Mehrzahl von Lichtführungen in Richtung eines oder mehrerer Schalter geführt. Durch den oder die Schalter kann oder können eine oder mehrere stärkere Lichtquellen eingeschaltet werden. Auf diese Weise können Lichtkonturen entsprechend mehrerer Außenkonturen der Schalter oder mehrerer Teile von zumindest einer Außenkontur eines Schalters erzeugt werden.

Fig. 3 zeigt ein weiteres Ausführungsbeispiel, bei dem eine LED 11 zur Erzeugung von mehreren Lichtkonturen entsprechend der Außenkonturen zweier Schalter eingesetzt wird. Die in der Figur gezeigte Anordnung ist symmetrisch zur LED 11. Ein erster Schalter 15 zum Einschalten einer ersten Lichtquelle mit höherer Lichtleistung als die LED 11 ist im linken Figurenteil erkennbar. Ein zweiter Schalter 16 zum Einschalten einer zweiten Lichtquelle mit höherer Lichtleistung als die LED 11 ist im rechten Figurenteil erkennbar. Zum Beispiel ist die eine der stärkeren Lichtquellen Teil einer Leselampe, die Licht nur in einen eingeschränkten Bereich des Fahrzeug-Innenraums abstrahlt, und ist die andere der stärkeren Lichtquellen Teil einer Lampe zur gleichmäßigen Beleuchtung des Fahrzeug-Innenraums.

Ein Lichtleiter 21 erstreckt sich zu beiden Seiten der LED 11 in Richtung des jeweiligen Schalters 15, 16. Der Lichtleiter 21 unterscheidet sich ferner von dem Lichtleiter 21 in Fig. 2 dadurch, daß er nicht um einen Rand einer Blende 17 herumgeführt ist. Vielmehr endet er bündig mit dem einer jeweiligen Seitenfläche 23 der Schalter 15, 16 gegenüberliegenden Ende der Blende 17. Zwischen dem Rand der Blende 17 und der Seitenfläche 23 ist jeweils ein Spalt, durch den das von der LED 11 kommende, durch den Lichtleiter 21 geleitete Licht in den Fahrzeug-Innenraum 1 hindurchtritt. Hierzu wird das Licht von der Seitenfläche 23 reflektiert, wie in Fig. 3 dargestellt ist.

Alternativ zu der in Fig. 3 dargestellten Ausführungsform kann die Seitenfläche zumindest eines der Schalter einen größeren Winkel als 90 Grad mit der Schalteroberfläche einschließen, so daß der Anteil des auf die Seitenfläche auftreffenden Lichts, der von der Seitenfläche durch den Spalt hindurchreflektiert wird, erhöht werden kann.

Die Seitenfläche 23 weist vorzugsweise einen Reflexionsgrad von mehr als 0,8 auf.

Die anhand von Fig. 2 und Fig. 3 beschriebenen Ausführungsbeispiele können auch kombiniert werden. Insbesondere wird Licht in der Nähe des Schalters in den Fahrzeug-Innenraum umgelenkt und wird außerdem Licht an einer Seitenfläche desselben Schalters reflektiert und dadurch in den Fahrzeug-Innenraum abgestrahlt.

## Patentansprüche

1. Beleuchtungsanordnung zur Beleuchtung des Innenraums (1) eines Kraftfahrzeugs, mit einer Innenleuchte (9), die folgendes aufweist:
- eine erste Lichtquelle (13),
- einen Schalter (15, 16) zum Einschalten der ersten Lichtquelle (13) und
- eine von dem Schalter (15, 16) beabstandete zweite Lichtquelle (11) mit einer niedrigeren Lichtleistung als die erste Lichtquelle (13), wobei die Innenleuchte (9) derart in dem Kraftfahrzeug angeordnet und ausgestaltet ist, daß durch die zweite Lichtquelle (11) ein von der Innenleuchte (9) beabstandeter Teil der Fahrzeug-Inneneinrichtung (5, 7) beleuchtbar ist
**dadurch gekennzeichnet,**
**daß** die Innenleuchte (9) eine Lichtführung (21) aufweist, die beim Betrieb der zweiten Lichtquelle (11) Licht von der zweiten Lichtquelle (11) in Richtung des Schalters (15, 16) führt, um eine Lichtkontur entsprechend einer Außenkontur des Schalters (15, 16) zu erzeugen.

2. Anordnung nach Anspruch 1,
wobei die Lichtführung (21) ein lichtleitendes Material aufweist.

3. Anordnung nach Anspruch 1 oder 2,
wobei die Lichtführung (21) derart ausgestaltet ist, daß Licht von der zweiten Lichtquelle (11) zunächst in Richtung des Schalters (15) geführt wird und in der Nähe des Schalters (15) in Richtung des Fahrzeug-Innenraums (1) umgelenkt wird.

4. Anordnung nach einem Ansprüche 1 bis 3,
wobei die Lichtführung (21) derart ausgestaltet und angeordnet ist, daß Licht von der zweiten Lichtquelle (11) zu einer Seitenfläche (23), seitlich einer zum Fahrzeug-Innenraum (1) weisenden Schalteroberfläche (25) des Schalters (15, 16), geführt wird und von der Seitenfläche (23) in Richtung des Fahrzeug-Innenraums (1) reflektiert wird.

## Claims

1. A lighting arrangement for lighting the interior (1) of a motor vehicle, with an interior light (9), having the following:
- a first light source (13),
- a switch (15, 16) for switching on the first light source (13) and
- a second light source (11) spaced apart from the switch (15, 16), with a lower light output than the first light source (13), the interior light (9) being arranged and configured in the motor vehicle in such a way that part of the vehicle interior equipment (5, 7) spaced apart from the interior light (9) can be illuminated by the second light source (11), **characterised in that** the interior light (9) has a light guide (21), which during operation of the second light source (11) guides light from the second light source (11) in the direction of the switch (15, 16) in order to produce a light contour in accordance with an outer contour of the switch (15, 16).

2. An arrangement according to claim 1, wherein the light guide (21) has a light-guiding material.

3. An arrangement according to claim 1 or 2, wherein the light guide (21) is configured in such a way that light is firstly guided from the second light source (11) in the direction of the switch (15) and is deflected in the vicinity of the switch (15) in the direction of the vehicle interior (1).

4. An arrangement according to any one of claims 1 to 3, wherein the light guide (21) is configured and arranged in such a way that light is guided from the second light source (11) to a side face (23) at the side of a switch surface (25) of the switch (15, 16), which points to the vehicle interior (1), and is reflected by the side face (23) in the direction of the vehicle interior (1).

## Revendications

1. Dispositif d'éclairage pour éclairer l'habitacle (1) d'un véhicule automobile comportant un point lumineux intérieur (9), avec :
- une première source lumineuse (13),
- un interrupteur (15, 16) pour brancher la première source lumineuse (13), et
- une seconde source lumineuse (11) distante de l'interrupteur (15, 16) et dont la puissance lumineuse est inférieure à celle de la première source lumineuse (13), le point lumineux (9) étant installé dans le véhicule et réalisé de façon que la seconde source lumineuse (11) éclaire une partie de l'installation intérieure (5, 7) du véhicule distante du point lumineux (9),
**caractérisé en ce que**
le point lumineux intérieur (9) comporte un guide de lumière (21) qui, lorsque la seconde source lumineuse (11) fonctionne, dirige la lumière de la seconde source lumineuse (11) vers l'interrupteur (15, 16) pour générer un contour lumineux correspondant au contour extérieur de l'interrupteur (15, 16).

2. Dispositif selon la revendication 1,
**caractérisé en ce que**
le guide de lumière (21) est en un matériau conducteur de lumière.

3. Dispositif selon la revendication 1 ou 2,
dans lequel
le guide de lumière (21) est réalisé pour que la lumière de la seconde source lumineuse (11) soit d'abord dirigée vers l'interrupteur (15) puis déviée à proximité de l'interrupteur (15) en direction de l'habitacle (1) du véhicule.

4. Dispositif selon les revendications 1 à 3,
selon lequel
le guide de lumière (21) est conçu et installé pour que la lumière de la seconde source lumineuse (11) soit guidée vers une surface latérale (23) à côté de la surface (25) de l'interrupteur (15, 16), tournée vers l'habitacle (1) du véhicule puis réfléchie par cette surface latérale (23) en direction de l'habitacle (1) du véhicule.
